# EUROPÄISCHE PATENTSCHRIFT

(11) **EP 1 063 577 B1**
(45) Veröffentlichungstag und Bekanntmachung des Hinweises auf die Patenterteilung: **14.05.2008**
(21) Anmeldenummer: 00112214.2
(22) Anmeldetag: 07.06.2000
(51) Int. Cl.: G05B 19/23

(54) **Verfahren zum Positionieren eines Schrittmotors und elektrischer Antrieb**
Process for positioning a step motor and an electrical drive
Procédé pour le positionnement d'un moteur pas à pas et commande électrique

(30) Priorität: 21.06.1999 DE 19928361
(43) Veröffentlichungstag der Anmeldung: 27.12.2000
(73) Patentinhaber: Berger Lahr GmbH & Co. KG, 77933 Lahr (DE)
(72) Erfinder: Saumer, Markus, 77948 Friesenheim (DE)
(74) Vertreter: Huwer, Andreas

(56) Entgegenhaltungen:
- EP-A- 0 559 464
- US-A- 4 588 937

## Beschreibung

Die Erfindung betrifft ein Verfahren zum Positionieren eines Schrittmotors, wobei ein vorgebbares Wegstreckensignal mit einer der mit dem Rotor des Schrittmotors zu verfahrenden Wegstrecke proportionalen Anzahl von Wegimpulsen vorgesehen ist, wobei durch Zählen der Wegimpulse ein Sollpositionssignal für das Statordrehfeld bzw. den Rotor des Schrittmotors gebildet wird, und wobei das Sollpositionssignal in ein Mikroschrittsignal konvertiert und als Posltionssollwert einem Lageregelkreis zum Positionieren des Statordrehfeldes des Schrittmotors zugeführt wird, wobei die Zeitdifferenz zwischen jeweils benachbart aufeinander folgenden Wegimpulsen gemessen und aus der Zeitdifferenz und der jedem Wegimpuls jeweils zugeordneten Wegstrecke die Positioniergeschwindigkeit des Drehfeldes des Schrittmotors ermittelt wird.

Des Weiteren bezieht sich die Erfindung auf einen elektrischen Antrieb, mit einem Schrittmotor, der zum Positionieren seines Statordrehfeldes mit einem einen Sollpositionselngang und einen Geschwindigkeitsvorsteuereingang aufwelsendenLageregelkreis verbunden ist, wobei ein Sollpositionserzeuger vorgesehen ist, der einen Wegimpulseingang für ein vorgebbares Wegstreckensignal mit einer der mit dem Statordrehfeld bzw. dem Rotor des Schrittmotors zu verfahrenden Wegstrecke proportionalen Anzahl von Wegimpulsen aufweist, wobei der Sollposltionserzeuger zum Konvertieren des Wegstreckensignals in ein Mikroschrittsignal ausgebildet ist und einen mit dem Sollpositionseingang des Lageregelkreises verbundenen Ausgang für das Mikroschrlttsignal aufweist, wobei eine Geschwlndigkeitsvorsteuereinrichtung vorgesehen ist, die zur Bildung eines Geschwindigkeltsvorsteuersignals aus dem zeitlichen Abstand jeweils benachbart aufeinanderfolgender Wegimpulse ausgebildet ist und einen mit dem Wegimpulseingang des Sollpositionserzeugers verbundenen Eingang sowie einen mit dem Geschwindigkeitsvorsteuerein gang des Lageregelkreises verbunden Ausgang für das Geschwindigkeitsvorsteuersignal hat.

Aus der Praxis kennt man bereits einen elektrischen Antrieb der eingangs genannten Art, dessen Sollpositionserzeuger einen Zähler zum Zählen der an dem Wegimpulseingang des Sollpositionserzeugers eingehenden Wegimpulse des Wegstreckensignals aufweist. Dabei wird das Wegstreckensignal in der Regel von einer übergeordneten Steuerung vorgegeben, um den Rotor des Schrittmotors in eine bestimmte Position zu bringen und/oder den Rotor um eine zur Anzahl der Wegimpulse proportionale Wegstrecke zu verfahren. Am Ausgang des Wegimpuls-Zählers liegt ein Sollpositionssignal an, das mittels eines Multiplizierglieds in ein Mikroschrittsignal konvertiert wird. Die Auflösung des Mikroschriffsignals ist größer als die des Wegstreckensignals, das heißt die am Wegimpulseingang des Sollpositionserzeugers eingehenden Wegimpulse werden in einer Anzahl Mikroschritte übersetzt, die größer ist als die Anzahl der Wegimpulse. Dabei ist das Übersetzungsverhältnis der Konvertierung einerseits durch die Schrittweite der mit dem Schrittmotor positionierbaren Mikroschritte und andererseits durch die Schrittweite der durch die übergeordnete Steuerung vorgegebenen Wegimpulse definiert. Das Mikroschrittsignal wird dann zum Positionieren des Schrittmotors dem Sollpositionseingang des Lagerregelkreises zugeführt. Die Konvertierung der am Eingang des Sollpositionserzeugers anliegenden Wegimpulse in Mikroschritte ermöglicht es, den Schrittmotor an einer übergeordneten Steuerung zu betreiben, deren Wegimpulse ein anderer Positionierweg beziehungsweise eine andere Schrittweite zugeordnet ist als den Mikroschritten des elektrischen Antriebs.

Bei dem vorbekannten Verfahren wird die Zeitdifferenz zwischen jeweils benachbart aufeinander folgenden Wegimpulsen gemessen und aus der Zeitdifferenz und der jedem Wegimpuls jeweils zugeordneten Wegstrecke wird die Positioniergeschwindigkeit des Drehfelds des Schrittmotors ermittelt. Mit der so ermittelten Positioniergeschwindigkeit wird dann die Geschwindigkeit, mit der das Statordrehfeld am Umfang des Schrittmotors positioniert beziehungsweise verfahren wird, vorgesteuert. Dabei wird die Geschwindigkeit, mit der das Statordrehfeld positioniert wird, sowohl in Abhängigkeit von der ermittelten Positionier- bzw. Vorsteuergeschwindigkeit als auch in Abhängigkeit von der durch Vergleich von Ist- und Sollposition gebildeten Lageabweichung des Statordrehfeld geregelt.

Wenn der zeitliche Abstand benachbart aufeinander folgender Wegimpulse groß ist und somit nur wenige Wegimpulse pro Zeiteinheit an den Zähleingang des Sollposlfionserzeugers angelegt werden, wird an dem Geschwindlgkeltsvorsteuer eingang des Lageregelkreises eine entsprechende kleine Positioniergeschwindigkelt vorgegeben. Die Umlaufgeschwindigkeit für das Statordrehfeld wird dann nahezu ausschließlich durch die mittels des Soll-Istwert-Positionsvergleiches ermittelte Lageabweichung des Statordrehfeldes bestimmt. Dadurch kommt es bei elektrischen Antrieben, bei denen der Lageregelkreis hart eingestellt ist und bei denen eine Lageabweichung des Statordrehfeldes von der Sollposition eine entsprechend hohe Positioniergeschwindigkeit des Statordrehfeldes bewirkt, während der Regelung zu einem Überschwingen der Position des Statordrehfeldes. In dem Schrittmotor entstehen dadurch mechanische Schwingungen und Vibrationen, das heißt der Schrittmotor weist bei niederfrequenten Wegstreckensignalen einen rauen Motorlauf auf Die Vibrationen können zwar dadurch gedämpft werden, das der Lagerlegelkreis weich beziehungsweise träge eingestellt wird, jedoch werden Positionsabweichungen des Statordrehfeldes dann nur noch mit einer vergleichsweisen geringen Positioniergeschwindigkeit des Statordrehfeldes ausgeregelt und es treten entsprechend große Schleppfehler auf

Aus EP-A-0 599 464 ist ferner ein Verfahren zum Positionieren eines Schrittmotors bekannt, bei dem ein Wegstreckensignal vorgegeben wird, das eine der mit dem Rotor des Schrittmotors zu verfahrenden Wegstrecke proportionale Anzahl von Wegimpulsen aufweist. Durch Zählen der Wegimpulse wird ein Sollpositionssignal für den Rotor des Schrittmotors gebildet. Dieses wird an eine Motorschrittsequenzereinrichtung angelegt, die zum Ansteuern des Schrittmotors über eine Treiberschaltung mit der Wicklung des Schrittmotors verbunden ist. Die Rotorposition wird Hilfe eines lnkremental-Optikcodierers abgetastet. Zunächst wird ein erster Schritt an den Schrittmotor ausgegeben und es wird eine erste Rotorposition abgetastet. Dann wird Jede abgetastete Position mit der Position verglichen, an welcher der Rotor sein soll, wenn er den ersten Schritt vollendet hat Für jede verglichene Position wird ein Fehlerwert berechnet. Jedesmal, wenn der Fehlerwert eine vorbestimmte Beziehung zu einem Referenzwert trägt, wird der Schrittmotor kommufiert und der Referenzwert eingestellt. Das Verfahren ermöglicht zwar im Vergleich zu einem Schrittmotor, der mit einem festen Schaltwinkel angesteuert wird, eine genauere Einhaltung einer gewünschten Zielgeschwindigkeit. Das Verfahren und der danach arbeitende elektrische Antrieb sind jedoch relativ aufwändig.

Es besteht deshalb die Aufgabe, ein Verfahren und einen elektrischen Antrieb der Eingangs genannten Art zu schaffen, die insbesondere bei niederfrequenten Wegstreckensignalen einen vibrationsarmen Motorlauf und eine schnelle Positionierung des Rotors des Schrittmotors ermöglichen.

Diese Aufgabe wird bezüglich des Verfahrens mit den Merkmalen des Patentanspruchs 1 gelöst.

Das Statordrehfeld des Schrittmotors wird also, wenn aus der Zeiltdifferenz zwischen benachbart aufeinander folgenden Wegimpulsen und der diesen Wegimpulsen zugeordneten Wegstrecke eine Positioniergeschwindigkeit ermittelt wird, die kleiner ist als die Referenzgeschwindigkeit, mit einer fest vorgegebenen Geschwindigkeit positioniert. Dabei wird jeder Wegimpuls des Wegstreckensignals jeweils in eine entsprechende Anzahl Mikroschritte konvertiert und diese Mikroschritte werden so an den Schrittmotor ausgegeben, dass sich das Statordrehfeld am Umgang des Schrittmotors mit vorgegebenen Geschwindigkeit bewegt. Nach Abarbeitung der einem Wegimpuls jeweils zugeordneten Anzahl Mikroschritte wird das Statordrehfeld bis zum Auftreten des jeweils nächsten Wegimpulses angehalten. Die Wegimpulse werden also nicht in einem Schritt, sondern in mehreren kleinen Schritten abgearbeitet. In vorteilhafter Weise ermöglicht das etfindungsgemäße Verfahren einen vibrationsarmen Motorlauf, sogar dann, wenn der Lageregelkreis hart eingestellt ist und die einzelnen Mikroschritte mit einer entsprechend großen Positioniergeschwindigkeit des Statordrehfeldes ausgegeben werden. Insbesondere werden beim Ansteuern des Schrittmotors mit Wegimpulsen, die nur eine geringe Auflösung aufweisen und denen somit ein entsprechend großer Positionierweg zugeordnet ist, ein Überschwingen des Rotors sowie Schwingungen des Rotors um die anzusteuernde Sollposition reduziert oder sogar vermieden.

Wenn die aus der Zeitdifferenz zwischen benachbart aufeinander folgenden Wegimpulsen ermittelte Positioniergeschwindigkeit größer ist als die Referenzgeschwindigkeit erfolgt eine Geschwindigkeitsvorsteuerung des Lageregelkreises mit der ermittelten Positioniergeschwindigkeit. Der Schrittmotor wird dann ebenfalls in Mikroschritten positioniert, wobei jedoch die Ausgabegeschwindigkeit der Mikroschritte und somit die Umlaufgeschwindigkeit des Statordrehfeldes so gewählt wird, dass sich die einem Wegimpuls zugeordneten Mikroschritte in etwa gleichmäßig über die zwischen diesem Wegimpuls und dem zeitlich unmittelbar darauf folgenden Wegimpuls befindliche Zeitdauer verteilen. Das Verfahren ermöglicht also in beiden Betriebsarten, nämlich dem Positioniermodus, bei dem das Statordrehfeld mit einer fest vorgegebenen Geschwindigkeit verfahren wird und dem Bewegungsmodus, bei dem die in der Lageregelkreis eingreifende Geschwindigkeitsvorsteuerung vorgenommen wird, ein schnelles Positionieren des Schrittmotors unter weitgehender Vermeidung von Schleppfehlern. Erwähnt werden soll noch, dass der erste Wegimpuls des Wegstreckensignals vorzugsweise mit einer vorgegebenen Geschwindigkeit verfahren wird, so daß die Wegimpulse unmittelbar nach ihrem Auftreten in eine Positionierbewegung des Rotors umgesetzt werden können.

Die vorstehend genannte Aufgabe kann bezüglich eines Verfahrens der eingangs genannten Art mit den Merkmalen des Patentanspruchs 2 gelöst werden.

Auch bei dieser Lösung wird in beiden Betriebsarten, nämlich einerseits dem Positioniermodus, bei dem die Geschwindigkeitsvorsteuerung des Lageregelkreises mit einer fest vorgegebenen Geschwindigkeit vorgenommen wird, und andererselts dem Bewegungsmodus, bei dem die Geschwindigkeitsvorsteuerung mit der ermittelten Positioniergeschwindigkeit durchgeführt wird, ein schnelles Positionieren des Schrittmotors ermöglicht, wobei ein vibrationsarmer Motorlauf erreicht wird.

Besonders vorteilhaft ist, wenn durch Zählen der an den Schrittmotor ausgegeben Mikroschritte ein Positionssignal gebildet wird und wenn dieses Positionssignal mit dem Mikroschrittsignal verglichen und bei Signalgleichheit die Mikroschrittausgabe bis zum Auftreten des nächsten Wegimpulses blockiert wird. Das Statordrehfeld des Schrittmotors kann dann noch genauer an einer durch das Wegstreckensignal vorgegebenen Sollposition positioniertwerden.

Die vorstehend genannte Aufgabe wird bezüglich des elektrischen Antriebs der eingangs genannten Art mit den Merkmalen des Patentanspruchs 4 gelöst.

Bei einem Geschwindigkeitsvorsteuersignal, dessen Amplitude kleiner ist als die feste Geschwindigkeitsvorgabe, ist der Geschwindigkeitsvorsteuereingang des Lageregelkreises über den Umschalter mit der festen Geschwindigkeitsvorgabe verbunden, so dass das Statordrehfeld des Schrittmotors auch bei einem Wegstreckensignal mit zeitlichauseinander gezogenen Wegimpulsen, bei dem sich nur eine entsprechend kleine Signalamplitude des Geschwindigkeitsvorsteuersignals ergibt, ausreichend schnell positioniert werden kann. Da die dem Wegimpulsen jeweils zugeordnete Wegstrecke in mehreren kleinen Mikroschritten mit der maximalen Auflösung des Antriebs verfahren wird, ergibt sich trotz der vergleichsweise schnellen Positionierung des Statordrehfelds ein vibrationsarmer, weicher Motorlauf. Beim Positionieren des Statordrehfelds mit fest vorgegebenem Geschwindlgkeitsvorsteuersignal wird das Statordrehfeld beziehungsweise der Rotor jeweils nach dem Abarbeiten eines Wegimpulses bis um eintreffen des nächsten Wegimpulses angehalten. Bei einem Geschwindigkeitsvorsteuersignal, dessen Amplitude gröBer ist als die feste Geschwindigkeitsvorgabe, ist der Geschwindigkeitsvorsteuereingang des Lageregelkreises über den Umschalter mit dem Ausgang der Geschwindigkeitsvorsteuereinrichtung verbunden, so das dass Statordrehfeld und somit auch der Rotor des Schrittmotors dann zwischen benachbart aufeinander folgenden Wegimpulsen des Wegstreckenslgnals praktisch kontinuierlich verfahren wird. Die Mikroschrittausgabe wird beim Erreichen der Sollposition des Statordrehfeldes bis zur Vorgabe einer neuen Sollposition blockiert, das heißt die Ausgabe weiterer Mikroschritte wird unterdrückt und das Statordrehfeld des Schrittmotors wird in der zuletzt eingenommenen Position angehalten. Dadurch kann beim Erreichen der Sollposition ein Überschwingen des Statordrehfeldes noch besser unterdrückt werden, was einen besonders vibrationsarmen Lauf des Schrittmotors ermöglicht. Außerdem werden Schleppfehler vermieden.

Die vorstehend genannte Aufgabe kann bezüglich des eingangs genannten Antriebs auch mit den Merkmalen des Patentanspruchs 5 gelöst werden.

Bei dieser Lösung ist der Umschalter also in den Lageregelkreis geschaltet, was gegenüber der Lösung nach Anspruch 4 den zusätzlichen Vorteil hat, dass das Statordrehfeld noch schneller positioniert wird, nämlich mit einer konstanten, durch die Geschwindigkeitsvorgabe vorgegebenen Geschwindigkeit. Der mit dem Steuereingang der Schrittausgabeeinrichtung verbundene Ausgang für die Regelabweichung des Soll-Istwert-Positionsvergleichers ermöglicht darüber hinaus ein exaktes und nahezu schleppfehlerfreies Positionieren des Statordrehfeldes an der durch das Wegstreckesignal vorgegebenen Sollposition.

Nachfolgend sind Ausführungsbeispiele der Erfindung anhand der Zeichnung näher erläutert. Es zeigen:

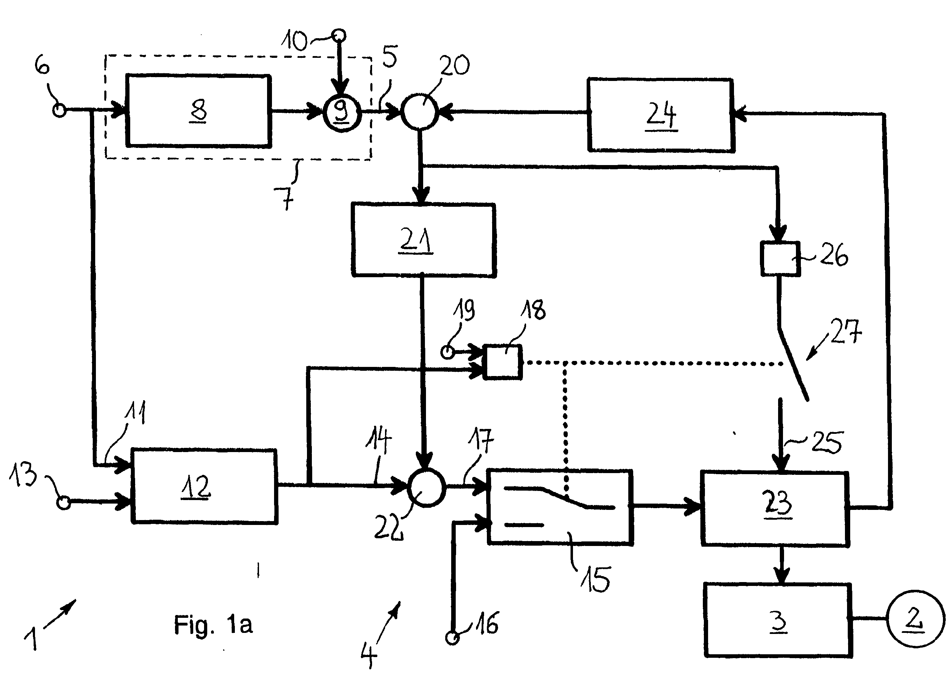

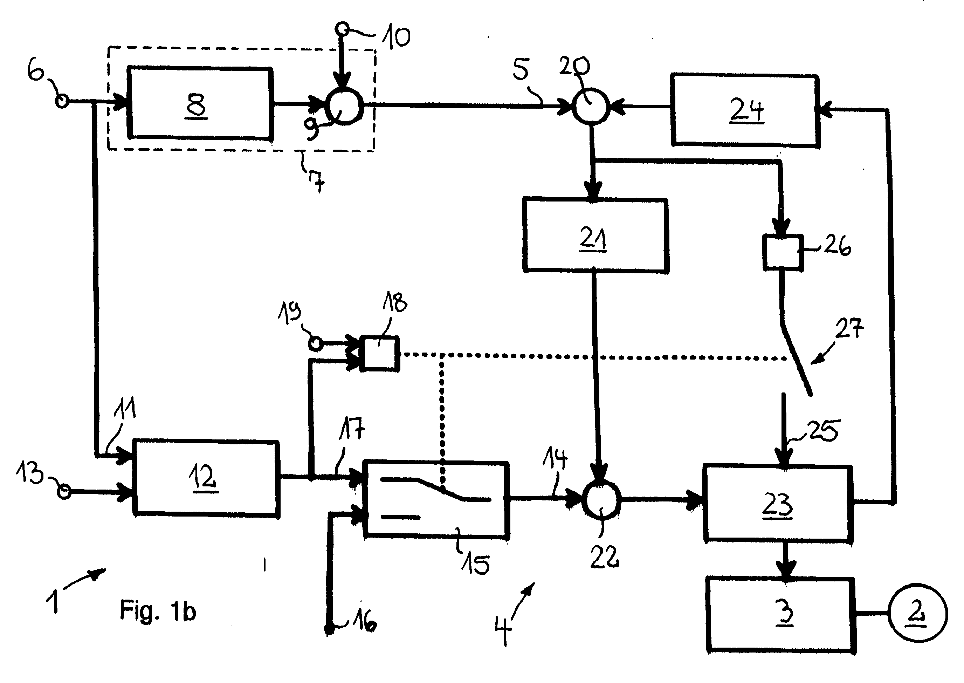

- Fig. 1 a: ein Blockschaltbild eines elektrischen Antriebs mit einem von einem Lageregelkreis gesteuerten Schrittmotor, wobei In dem Lageregelkreis ein Betriebsarten-Umschalter angeordnet ist,
- Fig. 1 b: ein Blockschaltbild ähnlich Figur 1, wobei jedoch der Umschalter dem Geschwindigkeitsvorsteuereingang des Lageregelkreises vorgeschaltet ist,
- Fig. 2: eine graphische Darstellung der Sollwertvorgabe für den Strangstrom eines Wicklungsstrangs des Schrittmotors des elektrischen Antriebs nach Figur 1, wobei auf der Abszisse die Anzahl der Mikroschritte und auf Ordinate die Sollwertvorgabe aufgetragen ist und wobei der Übergang vom Positioniermode zum Bewegungsmode erkennbar ist,
- Fig. 3: eine graphische Darstellung der Sollwertvorgabe im Positioniermode des Schrittmotors,
- Fig. 4: eine graphische Darstellung der Rotorposition des in Figur 1 gezeigten Antriebs über der Zeit, beim Positionieren eines mehrerer Mikroschritte aufweisenden Einzelschrittes und
- Fig. 5: eine Darstellung ähnlich Figur 4, jedoch für einen konventionellen Antrieb, bei dem der Rotor in einem Schritt verfahren wird.

Ein im Ganzen mit 1 bezeichneter elektrischer Antrieb weist einen Schrittmotor 2 auf, dessen Statorwicklung an der Endstufe 3 eines zum Positionieren des Statordrehfeldes des Schrittmotors vorgesehenen Lageregelkreises 4 verbunden ist. Der Lageregelkreis 4 hat einen Sollpositionseingang 5, der an dem Ausgang eines einen Wegimpulseingang 6 aufweisenden Sollpositionserzeuger 7 angeschlossen ist. An dem Wegimpulseingang 6 ist ein Wegstreckensignal mit einer der mit dem Statordrehfeld beziehungsweise dem Rotor des Schrittmotors 2 zu verfahrenden Wegstrecke proportionalen Anzahl von Wegimpulsen anlegbar.

Zum Konvertieren des Wegstreckensignals in ein Mikroschrittsignal ist der Wegimpulseingang 6 des Sollpositionserzeugers 7 mit dem Zähleingang eines Zählers 8 verbunden, an dessen Ausgang ein der Anzahl der an dem Wegimpulseingang 6 angelegten Wegimpulse entsprechendes Sollpositionssignal anliegt. Dem Zähler 8 ist ein Multiplizierglied 9 nachgeschaltet, welches das Sollpositionssignal in das Mikroschrittsignal konvertiert. Das Multiplizierglied 9 hat einen Eingang 10 für einen Übersetzungsfaktor, an dem die Anzahl der bei einem Wegimpuls mit dem Rotor beziehungsweise dem Statordrehfeld zu verfahrenden Mikroschritte vorgebbar ist. Der Ausgang des Multiplizierglieds 9 ist mit dem Sollpositionseingang des Lageregelkreises 4 verbunden. Der Wegimpulseingang 6 des Sollpositionserzeugers 7 ist an dem ersten Eingang 11 einer Geschwindigkeitsvorsteuereinrichrung 12 angeschlossen, die ihren zweiten Eingang 13 mit einem Zeitgeber zur Erzeugung eines Zeitsignals verbunden ist. Die Geschwindigkeitsvorsteuereinrichtung 12 ist zur Bildung eines Geschwindigkeitsvorsteuersignals ausgebildet, dass jeweils aus dem zeitlichen Abstand benachbart aufeinander folgender Wegimpulse des Wegstreckensignals ermittelt wird und am Ausgang der Geschwindigkeitsvorsteuereinrichtung 12 anliegt. Dieser Ausgang ist mit einem Geschwindigkeitsvorsteuereingang 14 des Lageregelkreises 4 verbunden.

Bei dem Ausführungsbeispiel nach Figur 1 b ist in dem Signalweg zwischen der Geschwindigkeitsvorsteuereinrichtung 12 und dem Geschwindigkeitsvorsteuereingang 14 des Lageregelkreises 4 ein Umschalter 15 angeordnet, der einen ersten Signaleingang 16 für eine feste Geschwindigkeitsvorgabe sowie einen 2, mit dem Ausgang der Geschwindigkeitsvorsteuereinrichtung verbundenen Signaleingang 17 aufweist. Der Signalausgang des Umschalters 15 ist an dem Geschwfndigkeitsvorsteuereingang 14 des Lageregelkreises angeschlossen.

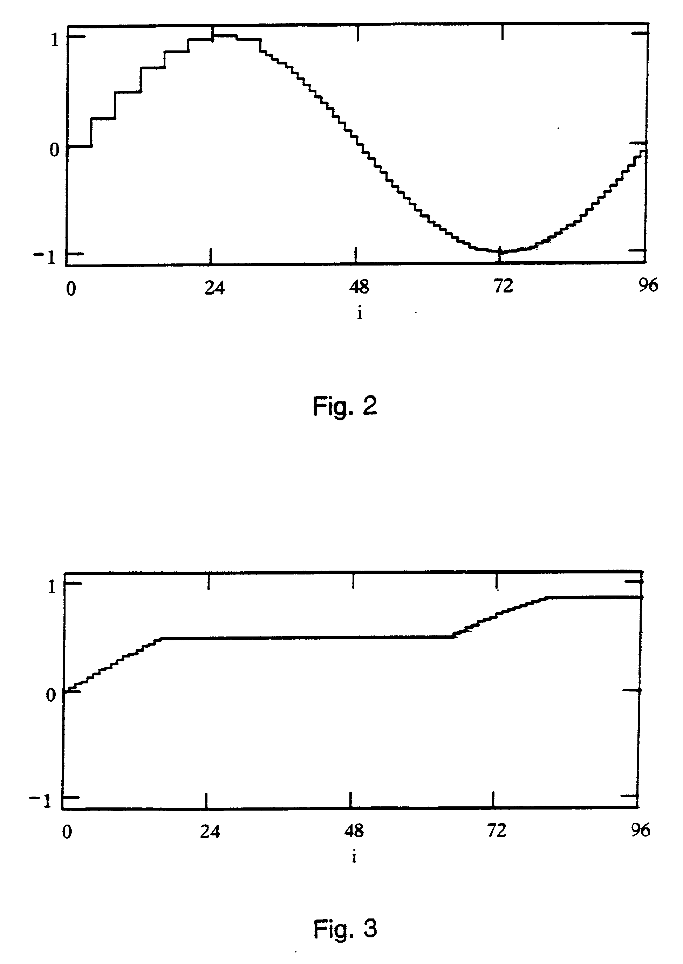

Zum automatischen Umschalten des Umschalters 15 in Abhängigkeit von dem Geschwindigkeitsvorsteuersignal ist eine Umschaltsteuereinrichtung vorgesehen, die eine Geschwindigkeitsvergleichseinrichtung 18 aufweist, deren einer Eingang mit dem Ausgang der Geschwindigkeitsvorsteuereinrichtung 12 und deren anderer Eingang mit einem Anschluss 19 für ein Referenzgeschwindigkeitssignal verbunden. Wenn das Geschwindigkeitsvorsteuersignal gröBer Ist als das Referenzgeschwindigkeitssignal, ist der Umschalter 15 in Figur 1 b gezeigten Lage angeordnet und verbindet den Ausgang der Geschwindigkeitsvorsteuereinrichtung 12 mit dem Geschwindigkeitsvorsteuereingang 14 des Lageregelkreises 4. Die zur Abarbeitung eines Wegimpulses an die Endstufe an die Endstufe aufzugebenden Mikroschritte werden dann jeweils gleichmäßig über die zwischen einem abzuarbeitenden Wegimpuls und den Jeweils benachbarten darauf folgenden Wegimpuls befindllche Zeitdauer verteilt.an die Endstufe 3 ausgegeben, was in der rechten Hälfte von Figur 2 deutlich erkennbar ist. Wenn das Geschwindigkeitsvorsteuersignal kleiner oder gleich dem Referenzgeschwindigkeitssignal ist, ist bei dem in Fig. 1 b gezeigten Ausführungsbeispiel der Signaleingang 16 für die feste Geschwindigkeitsvorgabe über den Umschalter 15 mit dem Geschwindigkeitsvorsteuereingang 14 Lageregelkreises 4 verbunden.

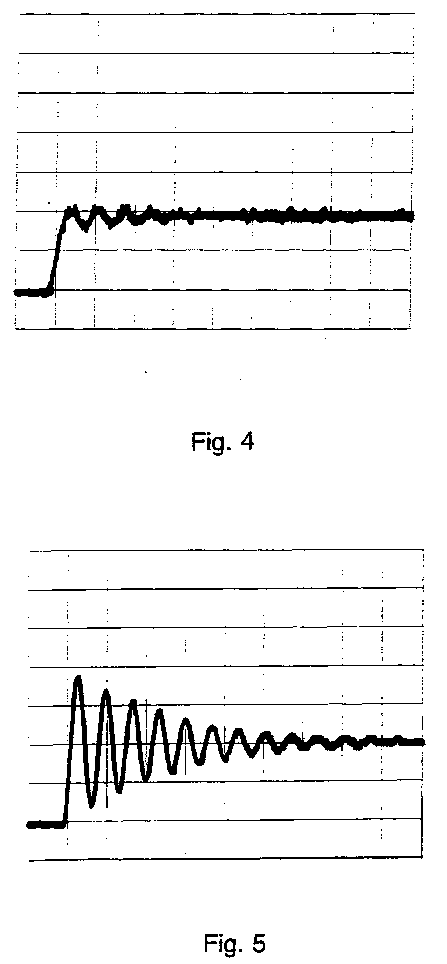

Wie in der linken Hälfte von Figur 2 und in Figur 3 erkennbar ist, wird dann zum Abarbeiten eines Wegimpulses jeweils eine dem Wegimpuls entsprechender Anzahl von Mikroschritten an die Endstufe 3 ausgegeben und danach wird die Mikroschrittausgabe bis zum Auftreten des nächsten Wegimpulses angehalten. In Figur 4 ist erkennbar, dass der Rotor nach dem Abarbeiten eines einzelnen Wegimpulses nicht oder nur unwesentlich über die Sollposition überschwingt. Im Vergleich dazu ist in Figur 5 die Rotorposition beim Ansteuern des Schrittmotors mit einer konventionellen Motorsteuerung wiedergegeben, bei welcher der Wegimpuls in einem einzigen Schritt verfahren wird. Deutlich ist das Überschwingen des Rotors über die Sollposition erkennbar.

In Figur 1 b ist erkennbar, dass der Lageregelkreis 4 einen Soll- Istwert-Positionsvergleich 20 mit dem Sollpositionseingang 5 aufweist. Der Ausgangsanschluss des Soll-Istwert-Positionsvergleich aus 20 ist über einen Regler 21 nicht mit einem ersten Eingang eines Soll-Istwert- Geschwindigkeitsvergleich aus 22 verbunden, dessen zweiter Eingang den Geschwindigkeitsvorsteuereingang 14 bildet. Der Ausgangsanschluss des Soll-Istwert-Geschwindigkeitsvergleichers 22 ist mit dem Eingang einer Schrittausgabeeinrichtung 23 verbunden, welche die Endstufe 3 für den Schrittmotor 2 ansteuert. Die Schrittausgabeeinrichtung 23 ist mit einem Zähler 24 zum zählen der an die Endstufe 3 ausgegebenen Mikroschritte verbunden. Der Ausgangsanschluss für das Zählsignal des Zählers 24 ist an einem Eingang des Soll-Istwert-Positionsvergleich aus 20 angeschlossen. Der Lageregelkrels 4 regelt also die Position des Statordrehfeldes. Es handelt sich also um ein gesteuertes System, bei dem eine Lagerückführung für die Rotorposition nicht vorgesehen ist.

Die Schrittausgabeeinrichtung 23 weist einen Steuereingang 25 zum Blockieren der Mikroschrittausgabe auf. Der Steuereingang 25 ist über eine Vergleichseinrichtung 26 und ein von der Geschwindigkeitsvergleichseinrichtung 18 gesteuertes Schaltelement 27 mit dem Ausgang des Soll-lstwert-Positionsvergleichers 20 verbunden. Mittels der Vergleichseinrichtung 26 und des Schaltelements 27 wird die Mikroschrittausgabe blockiert, wenn das am Ausgang der Geschwindigkeitsvorsteuereinrichtung 12 anliegende Geschwindigkeitsvorsteuersignal kleiner Ist als das an dem Anschluss 19 anliegende Referenzgeschwindigkeitssignal und wenn außerdem das Ausgangssignal des Soll-Istwert-Positionsvergleichers 20 gleich Null ist und somit das Statordrehfeld die Sollposition erreicht hat. Das Statordrehfeld behält dann die Sollposition bei, bis ein weiterer Wegimpuls an dem Wegimpulseingang 6 des Sollpositionserzeugers 7 eingeht (Figur 3).

Figur 1 a zeigt ein Blockschaltbild eines weiteren elektrischen Antriebs, das sich von dem Blockschaltbild nach Figur 1 b dadurch unterscheidet, dass der Umschalter 15 nicht in dem Signalweg zwischen der Geschwindigkeitsvorsteuereinrichtung 12 und dem Geschwindigkeitsvorsteuereingang 14 des Lageregelkreises 4 sondern in dem Lageregelkreis 4 angeordnet ist, und zwar in dem Signalweg zwischen dem Soll-Istwert-Geschwindigkeitsvergleichers 22 und dem Eingang der Schrittausgabeeinrichtung 23. Im Übrigen entspricht das Blockschaltbild in Figur 1 a demjenigen in Figur 1 b, weshalb nachfolgend nur auf die Unterschiede eingegangen wird.

Der zweite Signaleingang 17 des Umschalters 15 ist mit dem Ausgang des Soll-Istwert-Geschwindigkeitsvergleich aus 22 und der Signalausgang des Umschalters 15 ist mit dem Eingang der Schrittausgabeeinrichtung 23 verbunden. Wenn das Geschwindigkeitsvorsteuersignal größer ist als das Referenzgeschwindigkeitssignal ist der Umschalter 15 in der in Figur 1 a gezeigten Lage angeordnet und verbindet den Ausgang des Soll-Istwert-Geschwindigkeitsvergleichers 22 mit dem Eingang der Schrittausgabeeinrichtung 23. Der Lageregelkreis 4 ist dann geschlossen und die zur Abarbeitung eines Wegimpulses an die Endstufe auszugebenden Mikroschritte werden jeweils gleichmäßig über die zwischen dem Wegimpuls und dem benachbarten darauf folgenden Wegimpuls befindliche Zeitdauer verteilt an die Endstufe ausgegeben (Figur 2 rechts). Wenn das Geschwindigkeitsvorsteuersignal kleiner als das Referenzgeschwindigkeitssignal ist, verbindet der Umschalter 15 den Signaleingang 16 für die Geschwindigkeitsvorgabe mit dem Eingang der Schrittausgabeeinrichtung 23. Der Lageregelkreis 4 ist dann geöffnet und die zum Abarbeiten eines Wegimpulses auszugebenden Mikroschritte werden mit der durch das an dem ersten Signaleingang 16 des Umschalters 15 anliegende Signal definierten, festen Geschwindigkeit an die Endstufe ausgegeben. Danach wird die Schrittausgabeeinrichtung mittels des Steuereingangs 25 blockiert, bis der nächste Wegimpuls am Wegimpulseingang 6 angelegt wird.

Bei dem Verfahren zum Positionieren des Schrittmotors 2 wird ein Wegstreckensignal mit einer der mit dem Rotor des Schrittmotors 2 zu verfahrenden Wegstrecke proportionalen Anzahl von Wegimpulsen vorgegeben. Die Wegimpulse werden in ein Mikroschrittsignal konvertiert und als Positionssollwert einem Lageregelkreis 4 zum Positionieren des Statordrehfeldes des Schrittmotors 2 zugeführt. Aus der Zeitdifferenz zwischen Jeweils benachbart aufeinander folgenden Wegimpulsen wird die Positioniergeschwindigkeit des Drehfeldes ermittelt und mit einer vorgegebenen Referenzgeschwindigkeit verglichen. Bei einer ermittelten Positioniergeschwindigkelt, die kleiner ist als die Referenzgeschwindigkeit wird das Statordrehfeld mit einer fest vorgegebenen Geschwindigkeit bewegt, bis das Statordrehfeld den einzustellenden Positionssollwert erreicht hat. Bei einer Positioniergeschwindigkeit, die größer ist als die Referenzgeschwindigkeit, wird mit der ermittelten Positioniergeschwindigkeit eine in den Lageregelkreis 4 des Statordrehfeldes eingreifende Geschwindigkeitsvorsteuerung vorgenommen.

## Patentansprüche

1. Verfahren zum Positionieren eines Schrittmotors (2), wobei ein vorgebbares Wegstreckensignal mit einer der mit dem Rotor des Schrittmotors (2) zu verfahrende Wegstrecke proportionalen Anzahl von Wegimpulsen vorgesehen ist, wobei durch Zählen der Wegimpulse ein Sollpositionssignal für das Statordrehfeld bzw. den Rotor des Schrittmotors (2) gebildet wird, und wobei das Sollpositionssignal in ein Mikroschrittsignal konvertiert und als Positionssollwert einem Lageregelkreis (4) zum Positionieren des Statordrehfeldes des Schrittmotors (2) zugeführt wird, wobei die Zeitdifferenz zwischen jeweils benachbart aufeinander folgenden Wegimpulsen gemessen und aus der Zeitdifferenz und der jedem Wegimpuls jeweils zugeordneten Wegstrecke die Positioniergeschwindigkeit des Drehfeldes des Schrittmotors (2) ermittelt wird, **dadurch gekennzeichnet, dass** die ermittelte Positioniergeschwindigkeit mit einer vorgegebenen Referenzgeschwindigkeit verglichen wird, dass bei einer Positioniergeschwindigkeit, die kleiner ist als die Referenzgeschwindigkeit das Statordrehfeld mit einer fest vorgegebenen Geschwindigkeit verfahren wird, bis das Statordrehfeld den Positionssollwert erreicht hat, und dass bei einer Positioniergeschwindigkeit, die größer ist als die Referenzgeschwindigkeit mit der ermittelten Positioniergeschwindigkeit eine Geschwindlgkeitsvorsteuerung des Lageregelkreises (4) vorgenommen wird.

2. Verfahren nach dem Oberbegriff von Anspruch 1, wobei eine in den Lageregelkrels (4) des Statordrehfeldes eingreifende Geschwindlgkeltsvorsteuerung vorgenommen wird, **dadurch gekennzeichnet, dass** die ermittelte Positioniergeschwindigkeit mit einer vorgegebenen Referenzgeschwindigkeit verglichen wird, dass bei einer Positioniergeschwindigkeit, die kleiner ist als die Referenzgeschwindigkeit die Geschwindigkeitsvorsteuerung mit einer fest vorgegebenen Geschwindigkeit vorgenommen wird und dass bei einer Positioniergeschwindigkeit, die größer ist als die Referenzgeschwindigkeit die Geschwindigkeitsvorsteuerung mit der ermittelten Positioniergeschwindigkeit vorgenommen wird.

3. Verfahren nach Anspruch 1 oder 2, **dadurch gekennzeichnet, dass** durch Zählen der an den Schrittmotor (2) ausgegebenen Mikroschritte ein Positionsistsignal gebildet wird, und dass dieses Positionsistsignal mit dem Mikroschrittsignal verglichen und bei Signalgleichheit die Mikroschrittausgabe bis zum Auftreten des nächsten Wegimpulses blockiert wird.

4. Elektrischer Antrieb (1), mit einem Schrittmotor (2), der zum Positionieren seines Statordrehfeldes mit einem einen Sollpositionseingang (5) und einen Geschwindigkeitsvorsteuereingang (14) aufweisenden Lageregelkreis (4) verbunden ist, wobei ein Sollpositionserzeuger (7) vorgesehen ist, der einen Wegimpulseingang (6) für ein vorgebbares Wegstreckensignal mit einer der mit dem Statordrehfeld bzw. dem Rotor des Schrittmotors (2) zu verfahrenden Wegstrecke proportionalen Anzahl von Wegimpulsen aufweist, wobei der Sollpositionserzeuger (7) zum Konvertieren des Wegstreckensignales in ein Mikroschrittsignal ausgebildet ist und einen mit dem Sollpositionseingang (5) des Lageregelkreises (4) verbundenen Ausgang für das Mikroschrittsignal aufweist, wobei eine Geschwindigkeitsvorsteuereinrichtung (12) vorgesehen ist, die zur Bildung eines Geschwindigkeitsvorsteuersignals aus dem zeitlichen Abstand jeweils benachbart aufeinander folgender Wegimpulse ausgebildet ist und einen mit dem Wegimpulseingang (6) des Sollpositionserzeugers (7) verbundenen Eingang sowie einen mit dem Geschwindigkeitsvorsteuereingang (14) des Lageregelkreises (4) verbunden Ausgang für das Geschwindigkeitsvorsteuersignal hat, wobei der Lageregelkreis (4) einen den Sollpositlonseingang (5) aufweisenden Soll-Istwert-Positionsvergleicher (20) mit einem nachgeschalteten Regler (21), einem diesem nachgeschalteten, den Geschwindigkeitsvorsfeuereingang (14) aufweisenden Soll-Istwert-Geschwindigkeitsvergleicher (22) mit einer nachgeschalteten, mit einer Endstufe (3) zur Ansteuerung des Schrittmotors (2) verbundenen Schrittausgabeeinrichtung (23) sowie einen mit der Schrittausgabeeinrichtung (23) verbundenen Zähler (24) zum Zählen der an die Endstufe (3) ausgegebenen Mikroschritte aufweist, dessen Zählausgang mit dem Soll-Istwert-Positionsvergleicher (20) verbunden ist, **dadurch gekennzeichnet, dass** der Geschwindigkeitsvorsteuereingang (14) des Lageregelkreises (4) mit dem Signalausgang eines Umschalters (15) verbunden ist, der einen ersten Signaleingang (16) für eine feste Geschwindigkeitsvorgabe sowie einen zweiten, mit der Geschwindigkeitvorsteuereinrichtung (12) verbundenen Signaleingang (17) aufweist, dass zum Umschalten des Umschalters (15) in Abhängigkeit von dem Geschwindigkeitsvorsteuersignal eine Umschaltsteuereinrichtung vorgesehen ist, die eine Geschwindigkeitsvergieicheinrichtung (18) aufweist, deren einer Eingang mit dem Ausgang der Geschwindigkeitsvorsteuereinrichtung (12) und deren anderer Eingang mit einem Anschluss (19) für ein Referenzgeschwindigkeitssignal verbundenen Ist, dass eine Umschaltsteuereinrichtung vorgesehen ist, die eine Geschwindigkeitsvergleicheinrichtung (18) aufweist, deren einer Eingang mit dem Ausgang der Geschwlndigkeitsvorsteuereinrichtung (12) und deren anderer Eingang mit einem Anschluss (19) für ein Referenzgeschwindigkeitssignal verbundenen ist, dass die Umschaltsteuereinrichtung derart ausgebildet ist dass bei einem Geschwindigkeitsvorsteuersignal, das gröBer ist als das Referenzgeschwindigkeitssignal, der erste Signaleingang (16) mit dem zweiten Signaleingang (17) und bei einem Geschwindigkeitsvorsteuersignal, das kleiner ist als das Referenzgeschwindigkeitssignal, der erste Signaleingang (16) mit dem Geschwindigkeitsvorsteuereingang (14) verbunden ist, und dass die Schrittausgabeelnrichtung (23) einen Steuereingang (25) zum Blockieren der Mikroschrittausgabe aufweist, der zum Blockieren der Mikroschrittausgabe, wenn die Regelabweichung des Soll-lstwert-Positionsvergleichers (20) gleich Null ist, mit dem Ausgang für die Regelabweichung der Soll-Istwert-Positionsvergleichers (20) verbunden ist.

5. Elektrischer Antrieb (1) nach dem Oberbegriff von Anspruch 4, **dadurch gekennzeichnet, dass** in dem Signalübertragungsweg zwischen dem Soll-Istwert-Geschwindigkeitsvergleicher (22) und der Schrittausgabeeinrichtung (23) ein Umschalter (15) angeordnet ist, der einen ersten Signaleingang (16) für eine feste Geschwindigkeitsvorgabe und einen zweiten, mit dem Soll-Istwert-Geschwindigkeitsvergleicher (22) verbundenen Signaleingang (17) sowie einen mit der Schrittausgabeeinrichtung (23) verbundenen Signalausgang aufweist, dass die Schrittausgabeeinrichtung (23) einen Steuereingang (25) zum Blockieren der Mikroschrittausgabe aufweist, der zum Blockieren der Mikroschrittausgabe, wenn die Regelabweichung des Soll-Istwert-Positionsvergleichers (20) gleich Null ist, mit dem Ausgang für die Regelabweichung der Soll-Istwert-Positionsvergleichers (20) verbunden ist, und dass zum Umschalten des Umschalters (15) in Abhängigkeit von dem Geschwindlgkeitsvorsteuersignal eine Umschaltsteuereinrichtung vorgesehen Ist, die eine Geschwindigkeitsvergleichseinrichtung (18) aufweist, deren einer Eingang mit dem Ausgang der Geschwindigkeitsvorsteuereinrichtung (12) und deren anderer Eingang mit einem Anschluss (19) für ein Referenzgeschwindigkeitssignal verbundenen ist.

## Claims

1. Method for positioning a stepping motor (2), with a predeterminable movement distance signal with a number of movement pulses proportional to the movement distance to be moved over by the rotor of the stepping motor (2) being provided with a nominal position signal for the stator rotating field and/or the rotor of the stepping motor (2) being formed by counting the movement pulses, and with the nominal position signal being converted to a microstep signal and being supplied as a position nominal value to a position control loop (4) for positioning the stator rotating field of the stepping motor (2), with the time difference between respectively adjacent successive movement pulses being measured and with the positioning velocity of the rotating field of the stepping motor (2) being determined from the time difference and from the movement distance in each case associated with each movement pulse, **characterized in that** the determined positioning velocity is compared with a predetermined reference velocity, **in that** if the positioning velocity is less than the reference velocity, the stator rotating field is moved at a fixed predetermined velocity until the stator rotating field has reached the position nominal value, and **in that**, if the positioning velocity is greater than the reference velocity, velocity pilot control is applied to the position control loop (4) using the determined positioning velocity.

2. Method according to the precharacterizing clause of Claim 1, with velocity pilot control acting on the position control loop (4) of the stator rotating field being carried out, **characterized in that** the determined positioning velocity is compared with a predetermined reference velocity, **in that** if the positioning velocity is less than the reference velocity, the velocity pilot control is carried out using a fixed predetermined velocity, and **in that**, if the positioning velocity is greater than the reference velocity, the velocity pilot control is carried out using the determined positioning velocity.

3. Method according to Claim 1 or 2, **characterized in that** a position actual signal is formed by counting the microsteps emitted to the stepping motor (2) and **in that** this position actual signal is compared with the microstep signal and, if the signals are the same, the microstep output is blocked until the next movement pulse occurs.

4. Electrical drive (1) having a stepping motor (2) which is provided for positioning its stator rotating field with a position control loop (4) which has a nominal position input (5) and a velocity pilot-control input (14), with a nominal position generator (7) being provided which has a movement pulse input (6) for a predeterminable movement distance signal with a number of movement pulses proportional to the movement distance to be moved over by the stator rotating field and/or the rotor of the stepping motor (2), with the nominal position generator (7) being designed to convert the movement distance signal to a microstep signal and having a microstep-signal output which is connected to the nominal position input (5) of the position control loop (4), with a velocity pilot-control device (12) being provided which is designed to form a velocity pilot-control signal from the time interval between respectively adjacent successive movement pulses, and having an input which is connected to the movement pulse input (6) of the nominal position generator (7) and an output, which is connected to the velocity pilot-control input (14) of the position control loop (4), for the velocity pilot-control signal, with the position control loop (4) having a nominal/actual value position comparator (20) which has the nominal position input (5), with a downstream regulator (21), a nominal/actual value velocity comparator (22) which is connected downstream from this and has the velocity pilot-control input (14), with a downstream step output device (23) which is connected to an output stage (3) for driving the stepping motor (2) as well as a counter (24) connected to the step output device (23) in order to count the microsteps emitted to the output stage (3), whose counting output is connected to the nominal/actual value position comparator (20), **characterized in that** the velocity pilot-control input (14) of the position control loop (4) is connected to the signal output of the changeover switch (15) which has a first signal input (16) for a fixed velocity preset as well as a second signal input (17) which is connected to the velocity pilot-control device (12), **in that**, in order to switch the changeover switch (15) as a function of the velocity pilot-control signal, a changeover switching control device is provided and has a velocity comparison device (18), one of whose inputs is connected to the output of the velocity pilot-control device (12) and whose other input is connected to a connection (19) for a reference velocity signal, **in that** a changeover switching control device is provided which has a velocity comparison device (18), one of whose inputs is connected to the output of the velocity pilot-control device (12) and whose other input is connected to a connection (19) for a reference velocity signal, **in that** the changeover switching control device is designed such that, if the velocity pilot-control signal is greater than the reference velocity signal, the first signal input (16) is connected to the second signal input (17), and, if the velocity pilot-control signal is less than the reference velocity signal, the first signal input (16) is connected to the velocity pilot-control input (14), and **in that** the step output device (23) has a control input (25) for blocking the microstep output which, in order to block the microstep output when the control error of the nominal/actual value position comparator (20) is equal to zero, is connected to the output for the control error from the nominal/actual value position comparator (20).

5. Electrical drive (1) according to the precharacterizing clause of Claim 4, **characterized in that** a changeover switch (15) is arranged in the signal transmission path between the nominal/actual value velocity comparator (22) and the step output device (23) and has a first signal input (16) for a fixed velocity preset and a second signal input (17) which is connected to the nominal/actual value velocity comparator (22), as well as a signal output which is connected to the step output device (23), **in that** the step output device (23) has a control input (25) for blocking the microstep output which, in order to block the microstep output when the control error of the nominal/actual value comparator (20) is equal to zero, is connected to the output for the control error from the nominal/actual value position comparator (20) and **in that**, in order to switch the changeover switch (15) as a function of the velocity pilot-control signal, a changeover switching control device is provided and has a velocity comparison device (18), one of whose inputs is connected to the output of the velocity pilot-control device (12) and whose other input is connected to a connection (19) for a reference velocity signal.

## Revendications

1. Procédé pour positionner un moteur pas à pas (2), un signal de trajet parcouru qui peut être prédéfini et qui présente un nombre d'impulsions de trajet proportionnel au trajet à parcourir par le rotor du moteur pas à pas (2) étant prévu, un signal de position de consigne pour le champ cyclique du stator ou le rotor du moteur pas à pas (2) étant calculé en comptant les impulsions de trajet et le signal de position de consigne étant converti en un signal de micro-pas et acheminé sous la forme d'une valeur de consigne de la position à un circuit régulateur de position (4) en vue de positionner le champ cyclique du stator du moteur pas à pas (2), la différence de temps entre les impulsions de trajet successives voisines respectives étant mesurée et la vitesse de positionnement du champ cyclique du moteur pas à pas (2) étant déterminée à partir de la différence de temps et du trajet respectivement associé à chaque impulsion de trajet, **caractérisé en ce que** la vitesse de positionnement déterminée est comparée avec une vitesse de référence prédéfinie, que dans le cas d'une vitesse de positionnement qui est inférieure à la vitesse de référence le champ cyclique du stator est déplacé à une vitesse prédéfinie fixe jusqu'à ce que le champ cyclique du stator ait atteint la valeur de consigne de la position et que dans le cas d'une vitesse de positionnement qui est supérieure à la vitesse de référence, une précommande de la vitesse du circuit régulateur de position (4) est effectuée avec la vitesse de positionnement déterminée.

2. Procédé selon le préambule la revendication 1, une précommande de vitesse intervenant dans le circuit régulateur de position (4) du champ cyclique du stator étant effectuée, **caractérisé en ce que** la vitesse de positionnement déterminée est comparée avec une vitesse de référence prédéfinie, que dans le cas d'une vitesse de positionnement qui est inférieure à la vitesse de référence, la précommande de la vitesse est effectuée avec une vitesse prédéfinie fixe et que dans le cas d'une vitesse de positionnement qui est supérieure à la vitesse de référence, la précommande de la vitesse est effectuée avec la vitesse de positionnement déterminée.

3. Procédé selon la revendication 1 ou 2, **caractérisé en ce qu'**un signal de position réelle est calculé en comptant les micro-pas délivrés sur le moteur pas à pas (2) et que ce signal de position réelle est comparé avec le signal de micro-pas et, en cas d'égalité des signaux, l'émission de micro-pas est bloquée jusqu'à l'apparition de l'impulsion de trajet suivante.

4. Mécanisme d'entraînement électrique (1) comprenant un moteur pas à pas (2) qui, en vue de positionner son champ cyclique de stator, est relié avec un circuit régulateur de position (4) présentant une entrée de position de consigne (5) et une entrée de précommande de la vitesse (14), un générateur de position de consigne (7) étant prévu, lequel présente une entré d'impulsion de trajet (6) pour un signal de trajet parcouru qui peut être prédéfini et qui présente un nombre d'impulsions de trajet proportionnel au trajet à parcourir par le champ cyclique du stator ou le rotor du moteur pas à pas (2), le générateur de position de consigne (7) étant configuré pour convertir le signal de trajet parcouru en un signal de micro-pas et présentant une sortie pour le signal de micro-pas reliée avec l'entrée de position de consigne (5) du circuit régulateur de position (4), un dispositif de précommande de la vitesse (12) étant prévu, lequel est configuré pour produire un signal de précommande de la vitesse à partir de l'écart dans le temps entre les impulsions de trajet successives voisines respectives et possède une entrée reliée avec l'entrée d'impulsion de trajet (6) du générateur de position de consigne (7) ainsi qu'une sortie pour le signal de précommande de la vitesse reliée avec l'entrée de précommande de la vitesse (14) du circuit régulateur de position (4), le circuit régulateur de position (4) présentant un comparateur de position de consigne/réelle (20) présentant l'entrée de position de consigne à la suite duquel est connecté un régulateur (21), un comparateur de vitesse de consigne/réelle (22) connecté à la suite de celui-ci et présentant l'entrée de précommande de la vitesse (14) et à la suite duquel est connecté un dispositif d'émission de pas (23) muni d'un étage final (3) pour l'excitation du moteur pas à pas (2) ainsi qu'un compteur (24) relié avec ce dispositif d'émission de pas (23) pour compter les micro-pas délivrés au niveau de l'étage final (3) et dont la sortie comptage est reliée avec le comparateur de position de consigne/réelle (20), **caractérisé en ce que** l'entrée de précommande de vitesse (14) du circuit régulateur de position (4) est reliée avec la sortie de signal d'un inverseur (15) qui présente une première entrée de signal (16) pour une consigne de vitesse fixe ainsi qu'une deuxième entrée de signal (17) reliée avec le dispositif de précommande de la vitesse (12), qu'un dispositif de commande d'inversion est prévu pour faire basculer l'inverseur (15) en fonction du signal de précommande de la vitesse, lequel présente un dispositif comparateur de vitesse (18) dont une entrée est reliée avec la sortie du dispositif de précommande de la vitesse (12) et dont l'autre entrée est reliée avec une borne (19) pour un signal de vitesse de référence, qu'il est prévu un dispositif de commande d'inversion qui présente un dispositif comparateur de vitesse (18) dont une entrée est reliée avec la sortie du dispositif de précommande de la vitesse (12) et dont l'autre entrée est reliée avec une borne (19) pour un signal de vitesse de référence, que le dispositif de commande d'inversion est configuré de telle sorte qu'en présence d'un signal de précommande de la vitesse qui est supérieur au signal de vitesse de référence, la première entrée de signal (16) est reliée avec la deuxième entrée de signal (17) et en présence d'un signal de précommande de la vitesse qui est inférieur au signal de vitesse de référence, la première entrée de signal (16) est reliée avec l'entrée de précommande de vitesse (14) et que le dispositif d'émission de pas (23) présente une entrée de commande (25) qui, pour bloquer l'émission de micro-pas lorsque l'écart type du comparateur de position de consigne/réelle (20) est égal à zéro, est reliée avec la sortie d'écart type du comparateur de position de consigne/réelle (20).

5. Mécanisme d'entraînement électrique (1) selon le préambule de la revendication 4, **caractérisé en ce que** dans le trajet de transmission du signal entre le comparateur de vitesse de consigne/réelle (22) et le dispositif d'émission de pas (23) est disposé un inverseur (15) qui présente une première entrée de signal (16) pour une consigne de vitesse fixe et une deuxième entrée de signal (17) reliée avec le comparateur de vitesse de consigne/réelle (22) ainsi qu'une sortie de signal reliée avec le dispositif d'émission de pas (23), que le dispositif d'émission de pas (23) présente une entrée de commande (25) pour bloquer l'émission de micro-pas, laquelle est reliée avec la sortie d'écart type du comparateur de position de consigne/réelle (20) afin de bloquer l'émission de micro-pas lorsque l'écart type du comparateur de position de consigne/réelle (20) est égal à zéro, et qu'il est prévu un dispositif de commande d'inversion pour faire basculer l'inverseur (15) en fonction du signal de précommande de la vitesse, lequel présente un dispositif comparateur de vitesse (18) dont une entrée est reliée avec la sortie du dispositif de précommande de la vitesse (12) et dont l'autre entrée est reliée avec une borne (19) pour un signal de vitesse de référence.
